# EUROPÄISCHE PATENTSCHRIFT

(11) **EP 1 885 517 B1**
(45) Veröffentlichungstag und Bekanntmachung des Hinweises auf die Patenterteilung: **31.10.2012**
(21) Anmeldenummer: 06742668.4
(22) Anmeldetag: 25.04.2006
(51) Int. Cl.: B23B 29/034, B23C 5/24, B23C 5/10

(54) **WERKZEUGHALTER MIT FEINEINSTELLUNG**
TOOLHOLDER WITH FINE ADJUSTMENT
PORTE-OUTIL A REGLAGE PRECIS

(30) Priorität: 01.06.2005 DE 102005025000
(43) Veröffentlichungstag der Anmeldung: 13.02.2008
(60) Teilanmeldung: 12184228.0
(73) Patentinhaber: Kennametal, Inc., Latrobe, PA 15650-0231 (US)
(72) Erfinder: KÜCHLER, Rainer, 91452 Wilhermsdorf (DE)
(74) Vertreter: FDST Patentanwälte
(86) Internationale Anmeldenummer: PCT/EP2006/003777
(87) Internationale Veröffentlichungsnummer: WO 2006/128524

(56) Entgegenhaltungen:
- EP-A- 0 703 030
- EP-A- 0 713 739
- WO-A-00/07762
- WO-A-01/26854
- WO-A-02/062513
- DE-A1- 19 740 410

## Beschreibung

Die Erfindung betrifft einen Werkzeughalter für ein Schneidelement mit dem Merkmal des Oberbegriffs des Anspruch 1. Ein solcherWerkzeughalter ist aus der WO 7762 A1 bekannt.

Bei Werkzeugen zur spanenden Bearbeitung von Werkstücken werden sowohl rotierenden Werkzeuge, wie beispielsweise Bohrer oder Fräser, als auch nicht rotierende Werkzeuge, wie beispielsweise Dreh- oder Stechmeißel eingesetzt.

Bei der Fertigung von hochgenauen Werkstücken kommt es oftmals insbesondere bei den rotierende Werkzeugen auf eine exakte radiale Positionierung der Schneidelemente an. Die Schneidelemente sind hierbei typischerweise auswechselbare Schneidplatten, die je nach Anwendungsfall auch als Wendeschneidplatten ausgebildet sind. Der Einsatz von geschliffenen Wendeschneidplatten, die zudem sehr teuer sind, kann durch die Verwendung des Feineinsteilmechanismus entfallen. Es können die fertigabgepreßten und somit kostengünstigeren Wendeschneidplatten verwendet werden.

Aus der FR 2 125 227 ist ein Fräswerkzeug mit einem Feineinstellmechanismus für die radiale Position einer Schneidplatte zu entnehmen. Hierbei ist eine schräg zur Längsachse des Werkzeugs und sich über die gesamte Breite des Werkzeugs erstreckende Nut eingearbeitet. Zusätzlich ist zentral im Werkzeuggrundkörper und den Nutgrund kreuzender Längsschlitz angeordnet. In die Nut ist in radialer Richtung von außen eine Verstellschraube einschraubbar. Hierdurch wird der vordere Teil des Werkzeuggrundkörpers, an dem die Schneidplatte befestigt ist, in radialer Richtung nach außen gebogen. Durch die Nut und den Längsschlitz wird der Werkzeuggrundkörper geschwächt, so dass die Stabilität beeinträchtigt ist. Zudem lässt sich durch diese Maßnahme, bei der das gesamte vordere Teilstück des Werkzeuggrundkörpers gebogen wird, nur eine Schneidplatte radial verstellen.

Bei einem weiteren in der FR 2 125 227 beschriebenen Ausführungsbeispiel ist ein Fräswerkzeug beschrieben, welches mehrere Schneidplatten aufweist. Diese sind jeweils mit Hilfe einer Kassette am Werkzeuggrundkörper befestigt. Die Kassette selber weist wiederum die Nut sowie einen am Nutgrund verlaufenden und im Querschnitt kreisförmigen Schlitz auf. Zur Feststellung der radialen Position wird auch hier eine Schraube in die Nut eingeschraubt. Durch die zusätzliche Anordnung einer Kassette ist hier jedoch der erforderliche Bauraum vergleichsweise groß und die Anzahl der benötigten Teile und ihr jeweiliger Raumbedarf hoch. Insbesondere bei kleinen Werkzeugen ist diese Variante daher ungeeignet.

Aus der DE 102 50 018 A2 ist ebenfalls ein Feineinstellmechanismus bei einem Fräswerkzeug zu entnehmen. Um den Umfang des Grundkörpers verteilt sind hierbei mehrere Verstellpartien angeordnet, die durch Spreizdurchbrüche vom zentralen Grundkörper getrennt und über zwei randseitige Materialbrücken mit dem zentralen Grundkörper verbunden sind. Die Verstellpartien tragen jeweils eine Schneidplatte. In radialer Richtung sind durch die Verstellpartie hindurch jeweils zwei Stützschrauben geführt, die sich gegen eine sich in Längsrichtung erstreckende Exzenterwalze abstützen. Die Feinpositionierung der Schneidplatte erfolgt hierbei über eine Verstellung der Exzenterwalze, die gegen die Stützschrauben wirkt, so dass diese und mit ihnen zusammen die gesamte Verstellpartie radial nach außen gedrückt wird. Aufgrund der gewählten Konstruktion muss hierbei die Verstellpartie massiv ausgebildet sein, um eine ausreichende Stabilität zu gewährleisten. Daher ist auch diese Ausführungsvariante für Werkzeuge mit kleinem Durchmesser nicht geeignet.

Die Anordnung einer Spannschraube in einen in den Werkzeuggrundkörper eingebrachten Schlitz zum Einklemmen eines Schneidelements in einem Plattensitz ist zudem beispielsweise aus der US 2003/0099519 A1 zu entnehmen. Hier ist jedoch keine Feineinstellung in radialer Richtung sondern lediglich ein Klemmen der Schneidplatte vorgesehen.

Aus der WO 00/07762 A1 sind zur Feineinstellung Spreizschlitze mit winklig zueinander orientierten Teilabschnitten zu entnehmen. Auch aus der EP 0 713 729 A2 ist ein Schneideinsatz zur Ermöglichung einer Feineinstellung von mehreren Spreizschlitzen umgeben, die jeweils von der Oberseite her eingebracht sind. Aus der WO 01/26854 A1 ist ein weiteres Beispiel für die Anordnung von Spreizschlitzen zu entnehmen, die in einen Grundkröper eingebracht sind.

Der Erfindung liegt die Aufgabe zugrunde, einen Werkzeughalter mit einem Feineinstellmechanismus für die radiale Position eines Schneidelements anzugeben, bei dem insgesamt ein sehr kompakter Aufbau bei gleichzeitig ausreichend hoher Stabilität erzielt ist, so dass der Feineinstellmechanismus insbesondere auch für Werkzeuge mit kleinem Außendurchmesser geeignet ist.

Die Aufgabe wird erfindungsgemäß durch einen Werkzeughalter gemäβ dem Anspruch 1 gelöst. Ein erfindungsgemäβer Werkzeughalter für ein Schneidelement, insbesondere Schneidplatte weist einen sich entlang einer Längsachse erstreckenden Werkzeuggrundkörper auf, der mit einem Feineinstellmechanismus für die radiale Position des Schneidelements ausgestattet ist und der einen Plattensitz zur Befestigung des Schneidelements aufweist. Der Plattensitz umfasst eine Auflagefläche, gegen die das Schneidelement verspannt wird, ist zu einer Schneidseite hin offen und weist gegenüberliegend zur Schneidseite eine rückseitige Anlagewand auf. Zur Ausbildung des Feineinstellmechanismus ist die Anlagewand durch Einbringung eines Spreizschlitzes als ein elastisch gehaltener Steg ausgebildet, der lediglich an einer Befestigungsseite mit dem restlichen Werkzeuggrundkörper verbunden ist. In den Spreizschlitz ist eine Schraube mit Kegelkopf zur Feineinstellung einschraubbar.

Durch die Ausgestaltung der Anlagewand als ein elastisch bieg- oder verformbarer Steg als eine flache, dünne Verstellplatte ist ein sehr Platz sparender Aufbau erreicht. Im Sinne einer kompakten Ausgestaltung ist das Schneidelement dabei unmittelbar am Werkzeuggrundkörper befestigt. Da zudem der Spreizschlitz unmittelbar angrenzend an den Plattensitz eingebracht ist und von diesem lediglich durch den dünnen Steg beabstandet, ist der Werkzeuggrundkörper nur sehr geringfügig geschwächt, so dass die Gesamtstabilität nur wenig beeinflusst ist. Insgesamt ist daher eine radiale Positionierung bei kompaktem Aufbau und hoher Stabilität erreicht. Um eine möglichst geringe Schwächung hervorzurufen, weist der Spreizschlitz bevorzugt lediglich eine Breite im Bereich von etwa 0,5 bis 1 mm auf.

Durch die nahe Anordnung des Spreizschlitzes am Plattensitz und dem vergleichsweise dünnwandigen Steg ist zudem bei Betätigung der Einstellschraube mit einem relativ geringen Kraftaufwand ein Verstellen der radialen Position ermöglicht. Der durch die Schraube zu verstellende Bereich des Werkzeuggrundkörpers ist lediglich der elastisch an der Befestigungsseite gehaltene Steg, der nur eine vergleichsweise geringe Masse aufweist. Daher kann auch die Einstellschraube entsprechend fein dimensioniert werden, was insgesamt zu einem kompakten Aufbau beiträgt.

Zur Ausbildung des Stegs weist der Spreizschlitz einen Längsschenkel sowie einen hierzu in etwa rechtwinklig verlaufenden ersten Querschenkel auf. Im Querschnitt gesehen ist der Spreizschlitz daher zumindest in etwa L-förmig ausgebildet. Durch den Längs- und Querschenkel ist der Steg daher an zumindest zwei Seiten vom restlichen Werkzeuggrundkörper getrennt. Der Querschenkel weist eine Länge auf, die in etwa der Wanddicke des Stegs entspricht und die Verbindung vom rückseitigen Längsschenkel zu der Plattenaufnahme herstellt.

Die Befestigungsseite des Stegs erstreckt sich entlang einer seitlichen Anlagewand des Plattensitzes. Die seitlichen Anlagewand bildet eine Wendeschneidplatten-Anlagefläche. Die Befestigungsseite des Stegs erstreckt sich daher senkrecht zur Auflagefläche. Ein zweiter Querschenkel des Spreizschlitzes verläuft auf dem Niveau der Auflagefläche bis zu dem Freiraum des Plattensitzes, trennt daher den Steg vom Boden (Auflagefläche) des Plattensitzes ab.

Gemäß einer zweckdienlichen Ausgestaltung verläuft hierbei der Längsschenkel parallel zur Anlagewand. Der Steg ist an drei Seiten vom restlichen Werkzeuggrundkörper getrennt und nur noch mit einer Befestigungsseite mit diesem verbunden.

Um den Werkzeuggrundkörper möglichst wenig zu schwächen, erstreckt sich der Spreizsitz lediglich in etwa über die Plattensitzbreite des Plattensitzes. Da der Spreizschlitz lediglich zum Abtrennen des die Anlagewand bildenden Stegs vorgesehen ist und keine weiteren Teile des Werkzeuggrundkörpers elastisch verbogen werden müssen, ist der vergleichsweise kurze Schlitz über die Plattensitzbreite für die gewünschte radiale Feineinstellung ausreichend.

Zweckdienlicherweise weist der Steg lediglich eine Wandstärke im Bereich von etwa 1,5 mm bis 2,5 mm auf. Mit dieser geringen Wandstärke ist eine Verstellung des Stegs gegen die elastischen Rückstellkräfte mit nur geringem Kraftaufwand und damit eine sehr feine Einstellung möglich. Gleichzeitig wird der zentrale Bereich des Werkzeuggrundkörpers kaum geschwächt.

Bevorzugt ist die Auflagefläche mit einem Schraubloch versehen, das zum Einschrauben einer durch das Schneidelement geführten Befestigungsschraube für das Schneidelement vorgesehen ist. Das Schneidelement wird daher im montierten Zustand unmittelbar durch die Befestigungsschraube gehalten. Es ist kein weiteres Klemmelement wie eine Spannbacke o.dgl. vorgesehen.

Um eine hochgenaue und sehr fein zu dosierende Einstellung zu ermöglichen, erstreckt sich der Spreizschlitz zweckdienlicherweise bis zu einer Spreeschlitztiefe, die über ein durch eine der Anlagewände des Plattensitzes definiertes Plattensitzniveau hinausreicht. Die Anlagewand ist die bereits erwähnte seitliche Anlagewand. Der Spreizschlitz erstreckt sich geringfügig über die Plattensitzbreite hinaus. Durch diese Maßnahme wird insgesamt Einfluss auf die elastische Rückstellkraft genommen. Zweckdienlicherweise erstreckt sich hierbei der Spreizschlitz lediglich etwa 1 mm bis 2,5 mm über das Plattensitzniveau hinaus.

Zur weiteren definierten Einstellung der elastischen Rückstellkraft ist gemäß einer zweckdienlichen Weiterbildung ein weiterer Spreizschlitz vorgesehen, welcher zum Spreizschlitz parallel orientiert und auf der dem Plattensitz zugewandten Seite des Stegs eingebracht ist. Durch diese Maßnahme wird die Biegekante des Stegs beispielsweise unterhalb des Niveaus der Auflagefläche verlegt. Hierdurch wird aufgrund des verlängerten "Biegearms" auf dem Niveau der Auflagefläche ein erhöhter Verstellweg erreicht. Zweckdienlicherweise erstreckt sich hierbei der weitere Spreizschlitz bis über die Spreizschlitztiefe hinaus. Um einen möglichst großen Verstellweg zu erreichen, ist zweckdienlicherweise weiterhin vorgesehen, dass der weitere Spreizschlitz geneigt zum Spreizschlitz verläuft, so dass zwischen diesen beiden Schlitzen ein spitzer Winkel ausgebildet ist. Dieser spitze Winkel liegt vorzugsweise im Bereich von etwa 5 bis 15°.

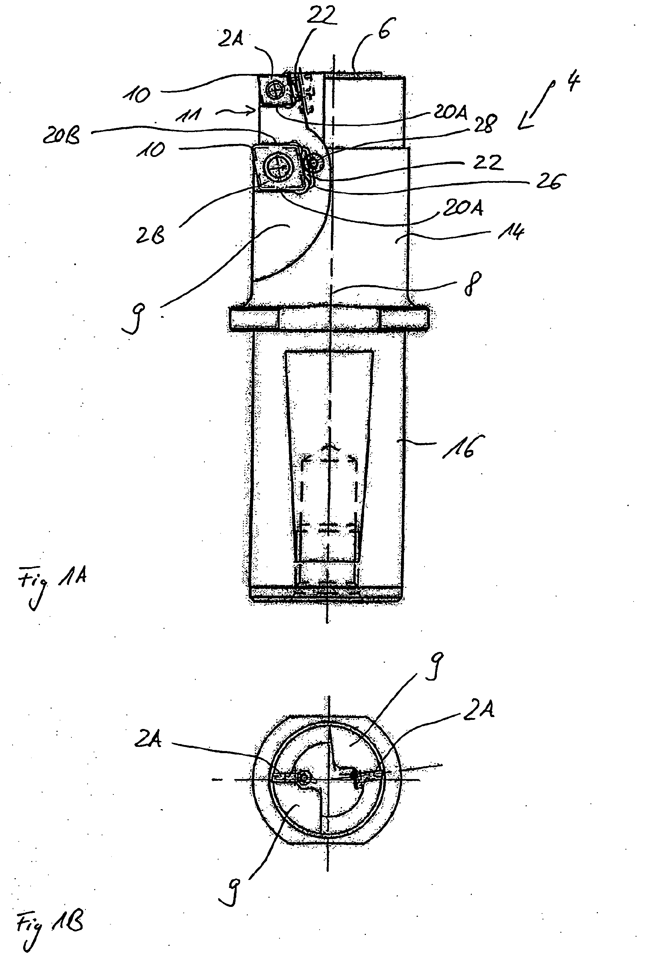

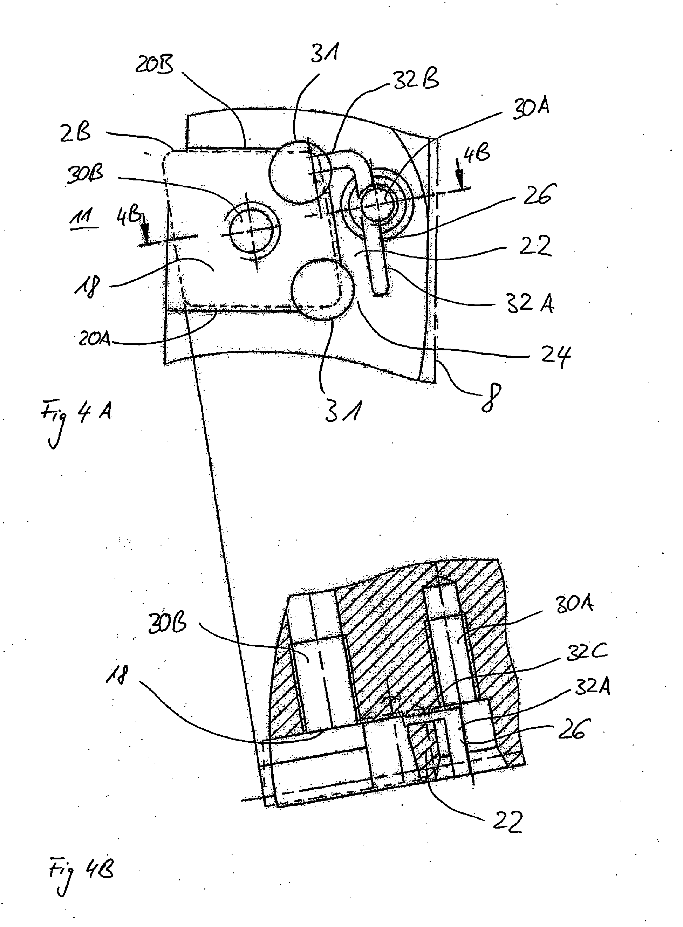

Verschiedene Beispiele von Werkzeughaltern werden im Folgenden anhand der Zeichnung näher erlautert. Die Fig. 4A, 4B zeigen dabei ein erfindungsgemäßes Ausführungsbeispiel. Die Fig. 1A, 1B, 2A, 2B, 3A, 3B, 5A und 5B zeigen Beispiele, die nicht in den Ansprüchen erfasst sind, jedoch das Vertändnis der Erfindung erleichtern. Es zeigen jeweils in ausschnittsweisen Darstellungen:
- Fig. 1A: ein Senkwerkzeug in einer Seitendarstellung mit in Axialrichtung versetzt zueinander angeordneten Schneidplatten,
- Fig. 1B: eine Ansicht auf die Stirnseite des Senkwerkzeugs gemäß Fig. 1A,
- Fig. 2A,2B: eine erste Variante eines Feineinstellmechanismus, wobei Fig. 2A eine teilweise Aufsicht auf die Stirnansicht gemäß Fig. 1B darstellt und die Fig. 2B eine Schnittdarstellung in etwa parallel zur Längsachse entlang der Linie 2B-2B in Fig. 2A ist,
- Fig. 3A,3B: ein zweites Beispiel eines Feineinstellmechanismus, wobei Fig. 3A analog zu Fig. 2A eine Ansicht auf die Stirnseite gemäß Fig. 1B zeigt und Fig. 3B eine Schnittdarstellung in etwa parallel zur Längsachse entlang der Linie 3B-3B gemäß Fig. 3A ist,
- Fig. 4A,4B: ein drittes Beispiel eines Feineinstellmechanismus , wobei es sich um ein Ausführungsbeispiel gemäβ der Erfindung handelt und Fig. 4A eine seitliche Ansicht auf eine von der Stirnseite in Axialrichtung zurückversetzte Schneidplatte ist, nach Art wie sie in Fig. 1A dargestellt ist, und Fig. 4B zeigt einen Schnitt in etwa quer zur Längsachse entlang der Linie 4B-4B gemäß Fig. 4A,
- Fig. 5A,5B: ein viertes Ausführungsbeispiel eines Feineinstellmechanismus, wobei Fig. 5A ähnlich wie Fig. 4A eine seitliche Ansicht auf die in Fig. 1A dargestellte zurückversetzte Schneidplatte und Fig. 5B eine Schnittdarstellung etwa senkrecht zur Längsachse entlang der Linie 5B-5B gemäß Fig. 5A ist sowie
- Fig. 6: eine Seitenansicht einer Einstellschraube mit kegelförmigem Schraubenkopf.

In den Figuren sind gleich wirkende Teile mit den gleichen Bezugszeichen dargestellt.

Der Feineinstellmechanismus zur radialen Positionierung einer Schneidplatte 2A,B wird beispielhaft anhand des in den Fig. 1A,1B dargestellten Senkwerkzeugs 4 erläutert. Prinzipiell lässt sich der Feineinstellmechanismus auf alle Werkzeugtypen übertragen, insbesondere auf rotierende Werkzeuge mit austauschbaren Schneidplatten 2, wie beispielsweise Fräser, Reibahlen, Senk- und Ausdrehwerkzeuge.

Wie aus den Fig. 1A,1B zu entnehmen ist, weist das Senkwerkzeug 4 zwei vordere, etwa um 180° drehversetzte Schneidplatten 2A auf, die unmittelbar an der vorderen Stirnseite 6 des Senkwerkzeugs 4 angeordnet sind. In Axial- oder Längsrichtung 8 zurückversetzt sind zwei weitere Schneidplatten 2B angeordnet, die mit den Schneidplatten 2A in einer gemeinsamen Spankammer 9 angeordnet sind und zueinander ebenfalls um etwa 180° drehversetzt angeordnet sind. Die Schneidplatten 2A,2B weisen jeweils ein Schneidecke 10 auf, die zu einer Schneidseite 11, nämlich der Umfangsfläche, orientiert ist. Mit der Schneidecke 10 stehen die Schneidplatten 2A, 2B bei der Werkstückbearbeitung in Eingriff mit dem Werkstück. Die Schneidecken 10 der Schneidplatten 2A,2B sind an unterschiedlichen radialen Positionen angeordnet, und zwar wird durch die hinteren, größeren Schneidplatten 2B ein größerer Umfang definiert. Unter Radialrichtung wird hier allgemein eine Richtung senkrecht zur Längsachse 8 verstanden. Die Schneidplatten 2A,2B sind direkt mit Hilfe einer Spannschraube an einem Werkzeuggrundkörper 14 befestigt. Dieser wird im Folgenden kurz als Grundkörper 14 bezeichnet. Der Grundkörper 14 weist in seinem rückwärtigen Bereich einen Schaft 16 auf, der im Betrieb in einer Werkzeugmaschine gehalten und mit Hilfe einer Spindel in eine Drehbewegung um seine mittige Rotationsachse versetzt wird.

Mit dem Senkwerkzeug 4 wird beispielsweise eine bestehende Bohrung für einen Dichtsitz fein bearbeitet, wobei die vorderen Schneidplatten 2A die zylindrische Oberfläche auf das vorgegebene Maß erweitern und die nachfolgenden, axial zurückversetzten Schneidplatten 2B den Durchmesser der Bohrung nochmals um ein exaktes Maß in einem oberen Teilbereich erweitern, so dass eine Stufe ausgebildet wird, auf die beispielsweise ein Dichtelement passgenau eingelegt wird.

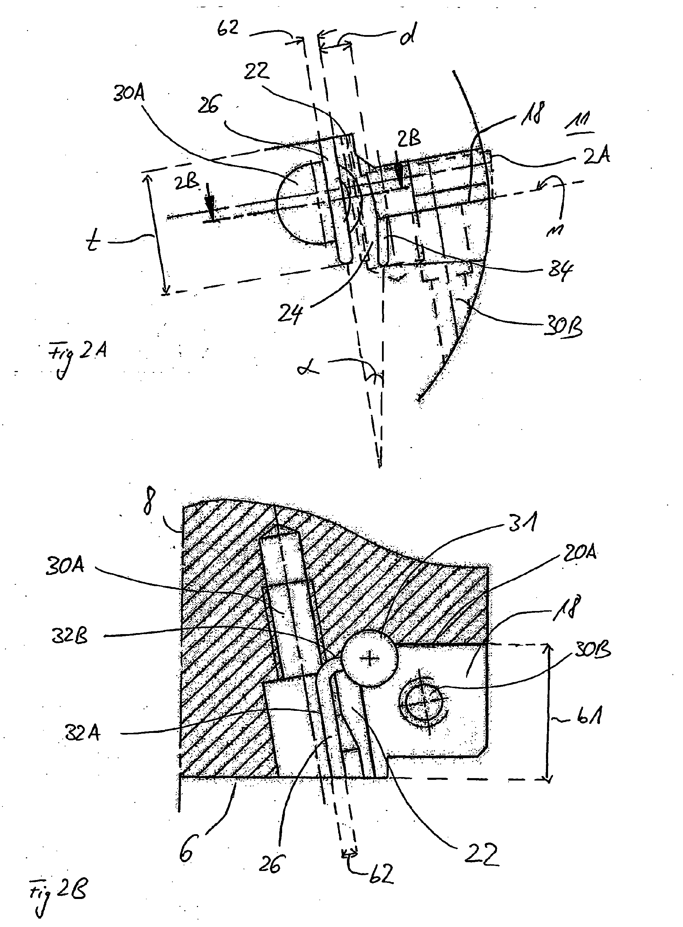

Die Schneidplatten 2A,2B werden in einem Plattensitz gehalten. Dieser ist gebildet durch eine Auflagefläche 18 (vgl. beispielsweise Fig. 2A,3A,4B,5B) zumindest einer seitlichen Anlagewand 20A,B sowie einer rückseitigen, durch einen elastisch gehaltenen Steg 22 gebildeten Anlagewand. Gegenüberliegend zu dem Steg 22 ist der Plattensitz zu der Schneidseite 11 hin offen, weist dort also keine Anlage- oder Begrenzungswand auf. Bei der Schneidplatte 2B weist der Plattensitz zwei seitliche Anlagewände 20A,B auf, wohingegen beim Plattensitz für die Schneidplatte 2A dieser auch zur Stirnseite 6 hin im Wesentlichen offen ist.

Der Steg 22 ist ein plattenartiges Element, welches lediglich noch an einer Befestigungsseite über einen Verbindungssteg 24 (vgl. Fig. 2A,3A,4A,5) mit dem restlichen Grundkörper 14 verbunden ist. Der Steg 22 ist ein durch einen Spreizschlitz 26 abgetrennter Teilbereich des Grundkörpers 14.

Zur Verstellung der radialen Position der Schneidplatten 2A,2B ist eine Einstellschraube 28 vorgesehen. Diese wird in ein mit einem Gewinde versehenen Schraubenloch 30A eingeschraubt. Der Spreizschlitz 26 kreuzt das Schraubenloch 30A, so dass beim Einschrauben der Einstellschraube 28 der Spreizschlitz 26 geöffnet und der Steg 22 in radialer Richtung nach außen gedrückt wird.

Das Schraubenloch 30A wird in den Werkzeuggrundkörper 14 eingebracht, bevor der Spreizschlitz 26 insbesondere durch ein Strempel-Erodierverfahren ausgebildet wird. Wie aus Fig. 1A zu entnehmen ist, wird die Einstellschraube 28 bei der Schneidplatte 2B in radialer Richtung in den Spreizschlitz 26 eingeschraubt, wohingegen die Einstellschraube 28 für die Schneidplatte 2A von der Stirnseite 6 her in etwa in Längsrichtung 8 eingeschraubt wird. Es sind somit 2 Einstellvarianten möglich, entweder von oben oder 90° dazu von der Stirnseite 6.

Wie insbesondere aus den Fig. 2B,3B,4A sowie 5A hervorgeht, weist der Plattensitz zum Steg 22 hin Ecklöcher 31 auf. Die Ecklöcher 31 werden üblicherweise bei der Ausbildung des Plattensitzes durch Bohren eingebracht. Hierbei wird auch ein Stück weit Material aus der Auflagefläche 18 abgetragen, so dass sich die in den Figuren erkennbaren kreisförmigen Spuren ergeben.

Ein erstes Beispiel eines Feineinstellmechanismus - im Folgenden als Variante A bezeichnet - wird nunmehr anhand der Fig. 2A,2B erläutert. Wie aus der Schnittdarstellung gemäß Fig. 2B zu entnehmen ist, ist der Spreizschlitz 26 gebildet durch einen Längsschenkel 32A sowie einen Querschenkel 32B. Der Längsschenkel 32A verläuft parallel zu der durch den Steg 22 gebildeten Anlagewand für die Schneidplatte 2A (in Fig. 2A gestrichelt dargestellt). Der Querschenkel 32B schließt sich in etwa durch einen 90°-Bogen rechtwinklig an den Längsschenkel 32A an und erstreckt sich zum vorderseitigen Freiraum des Plattensitzes. Der Längsschenkel 32A beginnt hierbei an der vorderen Stirnseite 6 des Grundkörpers 14 und entspricht in etwa einer Plattensitzbreite b1. Der Spreizschlitz 26 selbst weist eine Schlitzbreite b2 im Bereich von etwa 0,5 bis 1 mm auf. Der durch den Spreizschlitz 26 gebildete Steg 22 weist eine Wandstärke d auf, die im Bereich von etwa 1,5 mm bis 2,5 mm liegt. Der Spreizschlitz 26 weist eine Spreizschlitztiefe t auf. Im Ausführungsbeispiel der Fig. 2A,2B entspricht diese Tiefe t einer in etwa radialen Eindringtiefe senkrecht zur Längsachse 8. Die Tiefe t ist hierbei derart bemessen, dass der Spreizschlitz 26 sich über ein im Ausführungsbeispiel der Fig. 2A,2B durch die Auflagefläche 18 definiertes Plattensitzniveau n hinaus erstreckt.

Zusätzlich zum Spreizschlitz 26 ist ein weiterer Spreizschlitz 34 angeordnet, welcher an der Eckkante zwischen der Auflagefläche 18 und dem Steg 22 in den Grundkörper 14 eingebracht ist. Der weitere Spreizschlitz 34 erstreckt sich einerseits in etwa in Radialrichtung und verläuft andererseits entlang der Kante zwischen Auflagefläche 18 und Steg 22. In Radialrichtung ist der weitere Spreizschlitz 34 unter einem Neigungswinkel α orientiert, der im Ausführungsbeispiel etwa 12° beträgt. In die Auflagefläche 18 selbst ist ein weiteres Schraubenloch 30B eingebracht, welches zur Aufnahme der Spannschraube dient.

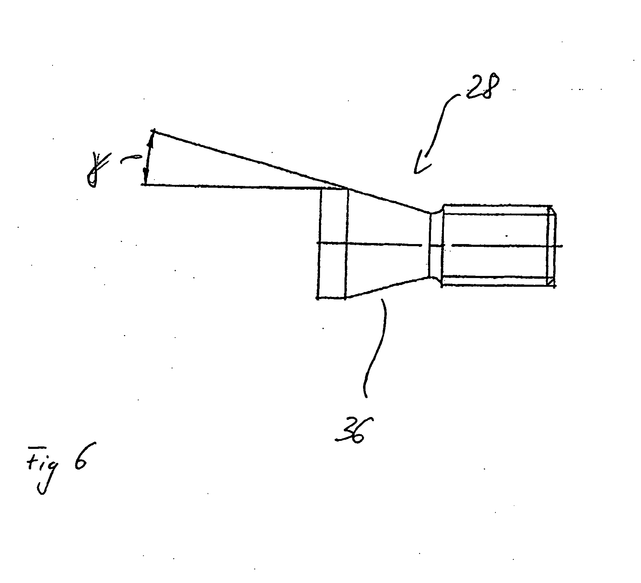

Wie aus Fig. 2B zu entnehmen ist, erstreckt sich das Schraubenloch 30A von der Stirnseite 6 aus unter schräger Orientierung zur Längsrichtung 8 in den Grundkörper 14 hinein. Der Spreizschlitz 26 schneidet das Schraubenloch 30A an der Stirnseite 6 außermittig. Das Schraubenloch 30A weist in einem Kopfbereich eine konisch nach Art eines Kegels zulaufende Anlagefläche für einen komplementär hierzu ausgebildeten Schraubenkopf 36 der Einstellschraube 28 auf (vgl. hierzu Fig. 6).

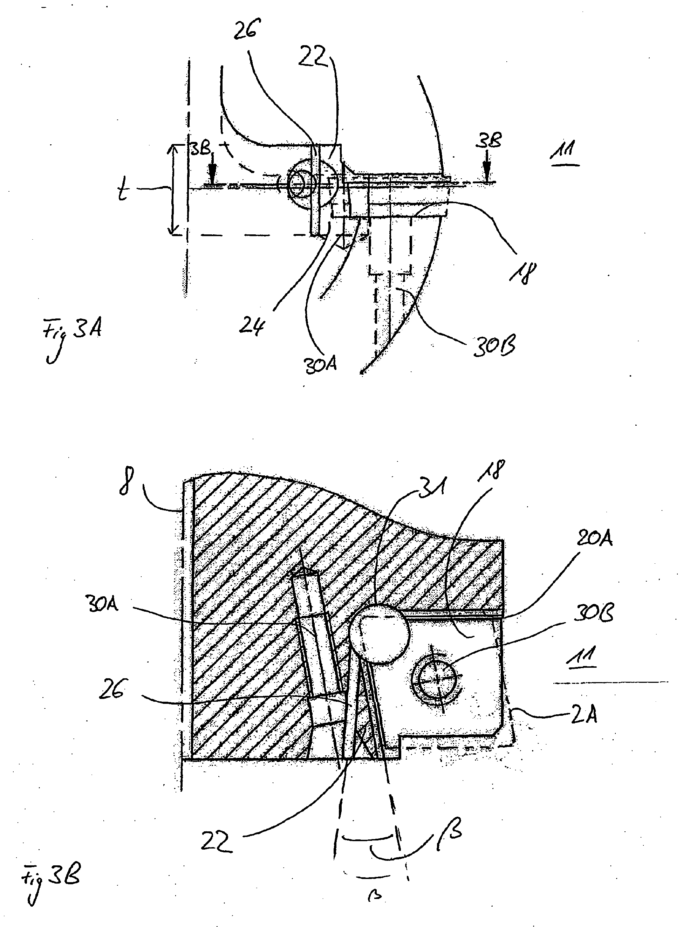

Das im Folgenden als Variante B bezeichnete Beispiel eines Feinenstellmechanismus gemäß den Fig. 3A,3B unterscheidet sich im Vergleich zu der Variante A im Wesentlichen durch den Verzicht auf den weiteren Spreizschlitz 34 sowie durch eine schräge Orientierung des Spreizschlitzes 26. Der Spreizschlitz 26 ist in diesem Ausführungsbeispiel zu der durch den Steg 22 gebildeten rückseitigen Anlagewand des Plattensitzes schräg verlaufend ausgebildet und schließt mit dieser einen spitzen Winkel β ein. Der Spreizschlitz 26 beginnt hier wiederum an der Stirnseite 6 und endet an dem gerundeten Ecklöcher 31 des Plattensitzes. Bei dieser Ausführungsvariante ist daher der Querschenkel 32B aufgrund der schrägen Ausbildung entfallen. Diese Ausführungsvariante zeichnet sich durch ein besonders einfaches Herstellen aus, da lediglich ein geradliniger Spreizschlitz 26 eingebracht werden muss.

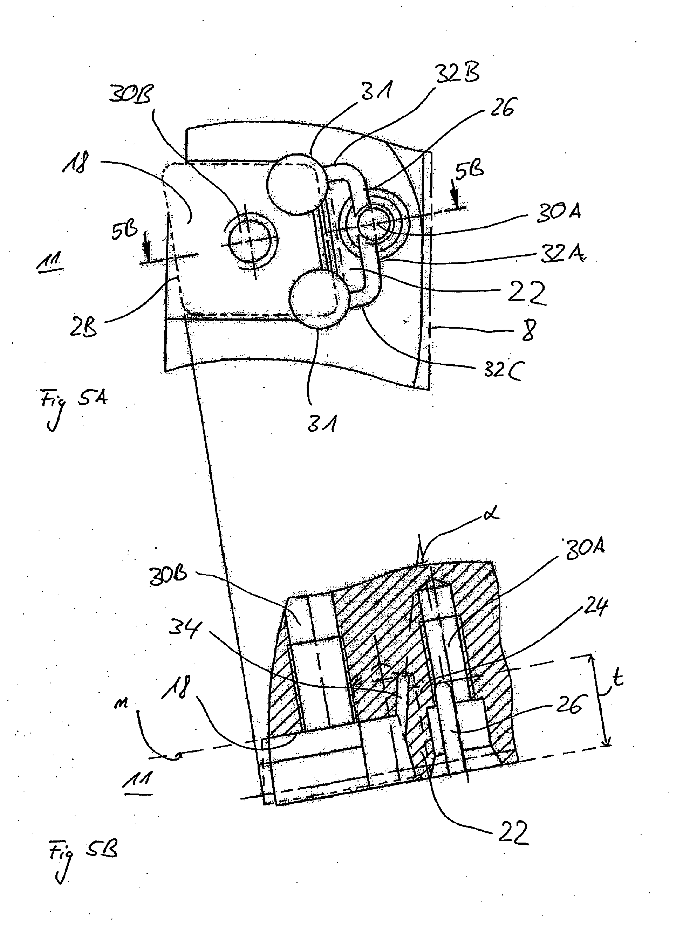

Bei dem Ausführungsbeispiel der Fig. 4A und 4B (im Folgenden als Variante C bezeichnet) sowie bei dem Beipiel eines Feineinstellmechanismus der Fig. 5A und 5B (im Folgenden als Variante D bezeichnet) erstreckt sich das Schraubenloch 30A von einer Umfangsfläche ausgehend in radialer Richtung. Gleichermaßen erstreckt sich der Spreizschlitz 26 bis zur Spreizschlitztiefe t in radialer Richtung.

Ein wesentlicher Unterschied zwischen den beiden Varianten C und D ist darin zu sehen, dass bei der Variante C gemäß den Fig. 4A,4B der Verbindungssteg 24 seitlich und in etwa senkrecht zur Auflagefläche 18 orientiert verläuft. Demgegenüber ist bei der Variante D gemäß den Fig. 5A,5B wie auch bei den Varianten A und B der Verbindungssteg 24 am Grunde des Plattensitzes entlang der Auflagefläche 18 verlaufend ausgebildet.

Da der Plattensitz bei den Varianten C und D eine zweite seitliche Anlagewand 20B zur Stirnseite 6 hin aufweist, ist bei diesen Ausführungsvarianten eine weitere Trennstelle zwischen dem Grundkörper 14 und dem Steg 22 vorgesehen. Und zwar weist der Spreizschlitz 26 neben dem Längsschenkel 32A sowohl einen ersten Querschenkel 32B als auch einen zweiten Querschenkel 32C auf. Bei der Variante C gemäß den Fig. 4A,4B ist der erste Querschenkel 32B als Verlängerung der zweiten seitlichen Anlagewand 20B ausgebildet. Der zweite Querschenkel 32C ist auf der Höhe der Auflagefläche 18 angeordnet und trennt den Steg 22 in etwa am Grunde des Plattensitzes vom restlichen Grundkörper 14.

Bei der Variante D gemäß den Fig. 5A,5B ist der Spreizschlitz 26 in der Aufsicht gemäß Fig. 5A in etwa nach Art eines U ausgebildet, wobei seine beiden Querschenkel 32B,32C sich jeweils zu den Ecklöchem 31 des Plattensitzes öffnen. Bei dieser Ausführungsvariante ist wiederum ein weiterer Spreizschlitz 34 vorgesehen, der sich von einer Eckkante zwischen Auflagefläche 18 und Steg 22 schräg zum Spreizschlitz 26 in den Grundkörper 14 hinein erstreckt. Sein Ende ist dabei - ähnlich wie beim Ausführungsbeispiel gemäß Fig. 2A,B - tiefer im Grundkörper 14 angeordnet, d.h. er erstreckt sich tiefer in den Grundkörper 14 hinein als der Spreizschlitz 26.

Mit der in Fig. 6 nochmals in einer Seitenansicht dargestellten Einstellschraube 28 erfolgt ein definiertes Aufspreizen des Spreizschlitzes 26 und damit eine definierte, exakte und sehr feine Einstellung der radialen Position der Schneidplatte 2A,2B. Die Einstellschraube 28 weist den kegelförmig ausgebildeten Schraubenkopf 36 auf. Die Kegel-Umfangsfläche ist zu der Schraubenlängsachse um einen Kegelwinkel γ geneigt. Das Aufspreizverhalten des Spreizschlitzes 26 wird durch die Einstellung dieses Neigungswinkels eingestellt, der im Ausführungsbeispiel etwa 15° beträgt. Die Kopfaufnahme des Schraubenlochs 30A ist komplementär hierzu mit einem Keilwinkel in der gleichen Größenordnung ausgebildet.

## Patentansprüche

1. Werkzeughalter für ein Schneidelement (2A,B) mit einem sich entlang einer Längsachse (8) erstreckenden Werkzeuggrundkörper (14), der mit einem Feineinstellmechanismus für die radiale Position des Schneidelementes (2A,B) ausgestattet ist und der einen Plattensitz zur Befestigung des Schneidelements (2A,B) aufweist, wobei der Plattensitz eine Auflagefläche (18) umfasst, gegen die das Schneidelement (2A,B) verspannt wird, zu einer Schneidseite (11) hin offen ist und gegenüberliegend zur Schneidseite (11) eine rückseitige Anlagewand aufweist, die durch Einbringung eines Spreizschlitzes (26) als ein elastisch gehaltener Steg (22) ausgebildet ist, der lediglich an einer Befestigungsseite (24) mit dem restlichen Werkzeuggrundkörper (14) verbunden ist, wobei in den Spreizschlitz (26) eine Einstellschraube (28) zur Feineinstellung der radialen Position des Schneidelements (2A,B) einschraubbar ist, wobei der Spreizschlitz (26) einen Längsschenkel (32A) sowie einen ersten und zweiten Querschenkel (32B,C) aufweist, wobei der erste Querschenkel) (32B) etwa rechteckig zum Längsschenkel (32A) verläuft
**dadurch gekennzeichnet,**
**dass** der zweite Querschenkel (32B) auf der Höhe der Auflagefläche (18) sich quer zum Längsschenkel (32A) zum Plattensitz erstreckt und den Steg (22) vom Boden des Plattensitzes abtrennt.

2. Werkzeughalter nach Anspruch 1,
**dadurch gekennzeichnet,**
**dass** der Längsschenkel (32A) parallel zur Anlagewand verläuft.

3. Werkzeughalter nach einem der vorhergehenden Ansprüche,
**dadurch gekennzeichnet,**
**dass** der Plattensitz eine Plattensitzbreite (b1) aufweist und der Spreizschlitz (26) sich lediglich in etwa über die Plattensitzbreite (b1) erstreckt.

4. Werkzeughalter nach einem der vorhergehenden Ansprüche,
**dadurch gekennzeichnet,**
**dass** der Steg (22) eine Wandstärke (d) im Bereich von etwa 1,5 mm bis 2,5 mm aufweist.

5. Werkzeughalter nach einem der vorhergehenden Ansprüche,
**dadurch gekennzeichnet,**
**dass** die Auflagefläche mit einem Schraubenloch (30B) versehen ist, das zum Einschrauben einer durch das Schneidelement (2A,B) geführten Spannschraube (12) für das Schneidelement (2A,B) vorgesehen ist.

6. Werkzeughalter nach einem der Ansprüche 1 bis 5,
**dadurch gekennzeichnet,**
**dass** die Befestigungsseite (24) des Stegs (22) sich entlang einer seitlichen Anlagewand (20A) des Plattensitzes erstreckt.

7. Werkzeughalter nach einem der vorhergehenden Ansprüche,
**dadurch gekennzeichnet,**
**dass** der Spreizschlitz (26) sich bis zu einer Spreizschlitztiefe (t) erstreckt, die über ein durch eine der Anlagewände (20A,B) des Plattensitzes definiertes Plattensitzniveau (n) hinausreicht.

8. Werkzeughalter nach Anspruch 7,
**dadurch gekennzeichnet,**
**dass** der Spreizschlitz (26) sich bis zu etwa 1mm bis 2,5 mm über das Plattensitzniveau (n) hinaus erstreckt.

9. Werkzeughalter nach einem der vorhergehenden Ansprüche,
**dadurch gekennzeichnet,**
**dass** ein weiterer Spreizschlitz (34) vorgesehen ist, der zum Spreizschlitz (26) parallel orientiert und auf der dem Plattensitz zugewandten Seite des Stegs (22) eingebracht ist.

10. Werkzeughalter nach Anspruch 9 und Anspruch 7 oder 8,
**dadurch gekennzeichnet,**
**dass** der weitere Spreizschlitz (34) sich bis über die Spreizschlitztiefe (t) hinaus erstreckt.

11. Werkzeughalter nach Anspruch 9 oder 10,
**dadurch gekennzeichnet,**
**dass** der weitere Spreizschlitz (34) geneigt zum Spreizschlitz verläuft, so dass zwischen diesen ein spitzer Neigungswinkel (α) ausgebildet ist.

## Claims

1. Tool holder for a cutting element (2A, B), having a tool main body (14) extending along a longitudinal axis (8), said tool main body (14) being equipped with a fine setting mechanism for the radial position of the cutting element (2A, B) and having an insert seat for fastening the cutting element (2A, B), wherein the insert seat comprises a bearing surface (18) against which the cutting element (2A, B) is restrained, is open towards a cutting side (11) and has a rear abutment wall opposite the cutting side (11), said abutment wall being in the form of an elastically held web (22) by introduction of a spreading slot (26), said web being connected to the rest of the tool main body (14) only on a fastening side (24), wherein a setting screw (28) for the fine setting of the radial position of the cutting element (2A, B) is screwable into the spreading slot (26), wherein the spreading slot (26) has a longitudinal arm (32A) and a first and second transverse arm (32B, C), wherein the first transverse arm (32B) extends approximately at right angles to the longitudinal arm (32A), **characterized in that** the second transverse arm (32C) extends at the height of the bearing surface (18) transversely to the longitudinal arm (32A) to the insert seat and separates the web (22) from the bottom of the insert seat.

2. Tool holder according to Claim 1, **characterized in that** the longitudinal arm (32A) extends parallel to the abutment wall.

3. Tool holder according to either of the preceding claims, **characterized in that** the insert seat has an insert seat width (b1) and the spreading slot (26) extends only approximately over the insert seat width (b1).

4. Tool holder according to one of the preceding claims, **characterized in that** the web (22) has a wall thickness (d) in the range of about 1.5 mm to 2.5 mm.

5. Tool holder according to one of the preceding claims, **characterized in that** the bearing surface is provided with a screw hole (30B) which is provided for screwing in a setting screw (12), guided through the cutting element (2A, B), for the cutting element (2A, B).

6. Tool holder according to one of Claims 1 to 5, **characterized in that** the fastening side (24) of the web (22) extends along a lateral abutment wall (20A) of the insert seat.

7. Tool holder according to one of the preceding claims, **characterized in that** the spreading slot (26) extends to a spreading slot depth (t) which extends beyond an insert seat level (n) defined by one of the abutment walls (20A, B) of the insert seat.

8. Tool holder according to Claim 7, **characterized in that** the spreading slot (26) extends up to about 1 mm to 2.5 mm beyond the insert seat level (n).

9. Tool holder according to one of the preceding claims, **characterized in that** there is provided a further spreading slot (34) which is oriented parallel to the spreading slot (26) and is introduced on that side of the web (22) that faces the insert seat.

10. Tool holder according to Claim 9 and Claim 7 or 8, **characterized in that** the further spreading slot (34) extends to beyond the spreading slot depth (t).

11. Tool holder according to Claim 9 or 10, **characterized in that** the further spreading slot (34) extends at an angle to the spreading slot such that an acute inclination angle (α) is formed therebetween.

## Revendications

1. Porte-outil pour un élément de coupe (2A, B), comprenant un corps de base d'outil (14) s'étendant le long d'un axe longitudinal (8), lequel corps de base d'outil est équipé d'un mécanisme de réglage précis de la position radiale de l'élément de coupe (2A, B) et comprend un siège de plaquette pour la fixation de l'élément de coupe (2A, B), le siège de plaquette comportant une surface d'appui (18) contre laquelle est serré l'élément de coupe (2A, B), étant ouvert en direction d'un côté de coupe (11) et comprenant à l'opposé du côté de coupe (11) une paroi d'appui arrière qui est réalisée, par l'aménagement d'une fente d'expansion (26), en tant que nervure retenue de manière élastique (22) qui est reliée au reste du corps de base d'outil (14) seulement au niveau d'un côté de fixation (24), une vis de réglage (28) pour le réglage précis de la position radiale de l'élément de coupe (2A, B) pouvant être vissée dans la fente d'expansion (26), la fente d'expansion (26) comprenant une branche longitudinale (32A) ainsi qu'une première et une deuxième branche transversale (32B, C), la première branche transversale (32B) s'étendant approximativement perpendiculairement à la branche longitudinale (32A),
**caractérisé en ce que**
la deuxième branche transversale (32C) s'étend en direction du siège de plaquette à hauteur de la surface d'appui (18) transversalement à la branche longitudinale (32A) et sépare la nervure (22) du fond du siège de plaquette.

2. Porte-outil selon la revendication 1,
**caractérisé en ce que**
la branche longitudinale (32A) s'étend parallèlement à la paroi d'appui.

3. Porte-outil selon l'une quelconque des revendications précédentes,
**caractérisé en ce que**
le siège de plaquette présente une largeur de siège de plaquette (b1) et la fente d'expansion (26) s'étend seulement approximativement sur la largeur du siège de plaquette (b1).

4. Porte-outil selon l'une quelconque des revendications précédentes,
**caractérisé en ce que**
la nervure (22) présente une épaisseur de paroi (d) dans une plage d'environ 1,5 mm à 2,5 mm.

5. Porte-outil selon l'une quelconque des revendications précédentes,
**caractérisé en ce que**
la surface d'appui est pourvue d'un trou de vis (30B) qui est prévu pour le vissage d'une vis de serrage (12) pour l'élément de coupe (2A, B) qui est guidée par l'élément de coupe (2A, B).

6. Porte-outil selon l'une quelconque des revendications 1 à 5,
**caractérisé en ce que**
le côté de fixation (24) de la nervure (22) s'étend le long d'une paroi d'appui latérale (20A) du siège de plaquette.

7. Porte-outil selon l'une quelconque des revendications précédentes,
**caractérisé en ce que**
la fente d'expansion (26) s'étend jusqu'à une profondeur de fente d'expansion (t) qui dépasse au-delà d'un niveau de siège de plaquette (n) défini par l'une des parois d'appui (20A, B) du siège de plaquette.

8. Porte-outil selon la revendication 7,
**caractérisé en ce que**
la fente d'expansion (26) s'étend de jusqu'à environ 1 mm à 2,5 mm au-delà du niveau du siège de plaquette (n).

9. Porte-outil selon l'une quelconque des revendications précédentes,
**caractérisé en ce**
**qu'**une fente d'expansion supplémentaire (34) est prévue, laquelle est orientée parallèlement à la fente d'expansion (26) et est ménagée sur le côté de la nervure (22) qui est tourné vers le siège de plaquette.

10. Porte-outil selon la revendication 9 et la revendication 7 ou 8,
**caractérisé en ce que**
la fente d'expansion supplémentaire (34) s'étend jusqu'au-delà de la profondeur de la fente d'expansion (t).

11. Porte-outil selon la revendication 9 ou 10,
**caractérisé en ce que**
la fente d'expansion supplémentaire (34) s'étend de manière inclinée par rapport à la fente d'expansion, de telle sorte qu'un angle d'inclinaison aigu (a) soit formé entre celles-ci.
